# EUROPEAN PATENT APPLICATION

(11) **EP 3 059 885 A1**
(43) Date of publication of application: **24.08.2016**
(21) Application number: 16000038.6
(22) Date of filing: 11.01.2016
(51) Int. Cl.: H04H 20/67

(54) **ADAPTIVE NETWORK OPTIMIZATION IN OVERLAP ZONE IN A SIMULCAST SYSTEM**

(30) Priority: 20.02.2015 US 201514627093
(71) Applicant: HARRIS CORPORATION, Melbourne, FL 32919 (US)
(72) Inventor: Ihsan, A. Akbar, Lynchburg, VA 24503 (US); Seyed, A. Tabaian, Forest, VA 24551 (US)
(74) Representative: Schmidt, Steffen J.

(57) **Abstract**

In a simulcast communication session, at least one condition is monitored that is indicative of the potential occurrence of time domain interference at a plurality of mobile subscriber units. In response to such monitoring at least one simulcast operating parameter (SOP) is dynamically modified to reduce time domain interference experienced by one or more of the mobile subscriber units. The SOP is modified to minimize time domain interference within at least a portion of an overlap area defined between a first base transceiver station and a second base transceiver station.

## Description

### BACKGROUND OF THE INVENTION

### Statement of the Technical Field

The inventive arrangements relate to communication systems, and more particularly to adaptive simulcast communication systems.

### Description of the Related Art

Simulcast systems are frequently used in critical public safety communication applications. In a simulcast communication system, multiple remote transmit sites operate under the command of a common control point. The control point causes each transmit site to broadcast the same signal, on the same RF frequency, at the precise time necessary for simultaneous arrival of the signal in overlap regions. This arrangement allows a simulcast communication system to provide reliable communication over a broader geographic area than would otherwise be possible with a single transmitting station. Simulcast systems have many advantages but must contend with the problem of time delay interference (TDI), which involves signals from one transmit site destructively interfering with signals from other transmit sites. In order to control this problem, each remote transmit site will include a very precise timing system to facilitate synchronization of RF transmissions from each of the multiple transmit sites.

Delay spread is a key parameter of TDI. Delay spread is most problematic when signals with similar strength are received from two or more transmitters that vary greatly in their distance from the receiving unit. The large difference in distance can cause the signals from each transmitter to be received at the radio at slightly different times. Problems with delay spread can cause bit error rates to increase, leading to poor communications quality.

### SUMMARY OF THE INVENTION

Embodiments of the invention concern a method for dynamic network optimization in a simulcast communication system. The method involves hosting a simulcast communication session using a first base transceiver station (BTS) and at least one simulcast operating parameter (SOP) assigned to the first BTS. The at least one SOP is a parameter that has been selected to minimize time domain interference within at least a portion of an overlap area defined between the first BTS and a second BTS when signals from the first BTS and second BTS are concurrently received within the overlap area. The invention further involves monitoring at least one condition which is indicative of the potential occurrence of time domain interference among one or more of a plurality of mobile subscriber units participating in the simulcast communication session. As an example, this condition can be a geographic location or distribution of a plurality of mobile subscriber units participating in the simulcast communication session. In response to such monitoring the at least one SOP is dynamically modified to reduce time domain interference experienced by one or more of the mobile subscriber units.

According to another aspect, the method involves hosting a simulcast communication session using a first base transceiver station (BTS) and a second BTS. Each BTS utilizes at least one simulcast operating parameter (SOP) selected to minimize time domain interference within at least a portion of an overlap area defined between the first and second BTS when signals from the first BTS and a second BTS are concurrently received within the overlap area. The method further includes monitoring one or more conditions or characteristics associated with a plurality of mobile subscriber units participating in the simulcast communication session. In response to such monitoring, at least one SOP in the first BTS is dynamically modified in coordination with the second BTS to optimize the performance of the network. According to another aspect, the invention includes a simulcast communication system for performing one or more of the above-described methods.

### BRIEF DESCRIPTION OF THE DRAWINGS

Embodiments will be described with reference to the following drawing figures, in which like numerals represent like items throughout the figures, and in which:
FIG. 1 is a simplified block diagram of a simulcast communication system that is useful for understanding the problem of time delay interference.
FIGs. 2A-2C are a set of diagrams which are useful for understanding a time domain interference problem which can occur under various scenarios in an overlap area of a simulcast communication system.
FIG. 3 is a flowchart that is useful for understanding the invention.
FIG. 4 is a flowchart that is useful for understanding a process that can be used for optimizing one or more simulcast operating parameters (SOPs) in a simulcast communication system
FIG. 5 is a diagram that is useful for understanding how the boundaries of an overlap area can be modified by controlling transmit power.
FIG. 6 is a diagram that is useful for understanding how the boundaries of an overlap area can be modified by controlling transmitter antenna patterns.
FIG. 7 is a block diagram that is useful for understanding an exemplary simulcast communication system in which the inventive arrangements can be implemented.

### DETAILED DESCRIPTION

The invention is described with reference to the attached figures. The figures are not drawn to scale and they are provided merely to illustrate the instant invention. Several aspects of the invention are described below with reference to example applications for illustration. It should be understood that numerous specific details, relationships, and methods are set forth to provide a full understanding of the invention. One having ordinary skill in the relevant art, however, will readily recognize that the invention can be practiced without one or more of the specific details or with other methods. In other instances, well-known structures or operation are not shown in detail to avoid obscuring the invention. The invention is not limited by the illustrated ordering of acts or events, as some acts may occur in different orders and/or concurrently with other acts or events. Furthermore, not all illustrated acts or events are required to implement a methodology in accordance with the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

The terminology used herein is for the purpose of describing particular embodiments only and is not intended to be limiting of the invention. As used herein, the singular forms "a", "an" and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

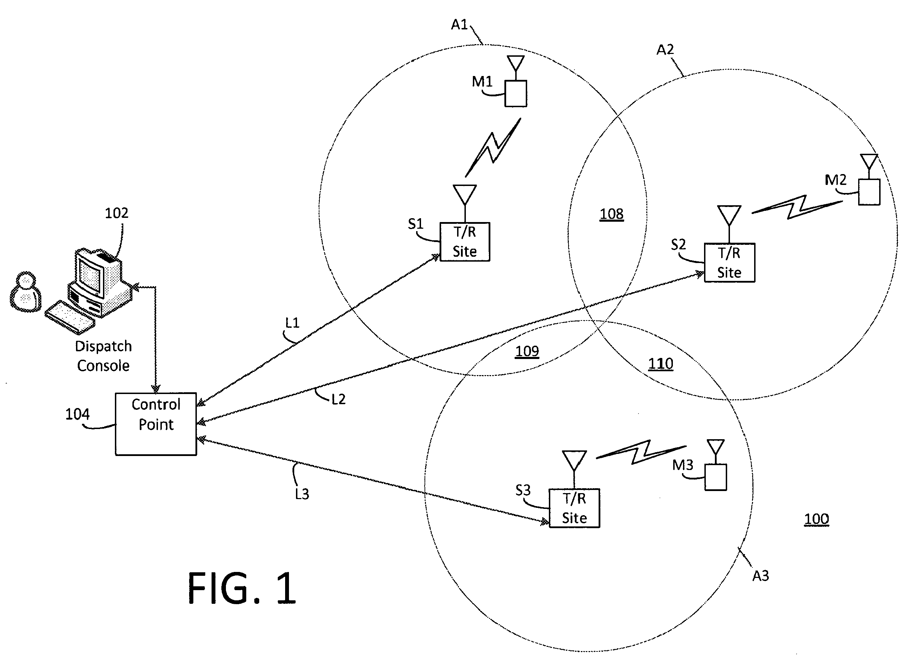

Referring now to FIG. 1 there is shown a block diagram of a simulcast type RF communication system 100. Simulcast RF systems are well known in the art and therefore will not be described here in detail. However, a brief overview of the operations of simulcast system 100 shall be provided for aiding in the understanding of the inventive arrangements. The communication system 100 includes three simulcasting transmit/receive sites (T/R sites) S1, S2 and S3. A base transceiver station (BTS) is provided at each T/R site to facilitate wireless communications with mobile subscriber units. The transmissions of the BTS at each site cover a predetermined geographic coverage area. For example, a BTS at T/R site S1 can cover area A1, a BTS at T/R site S2 can cover area A2, and a BTS at T/R site S3 can cover area A3. A central control point 104 is communicatively coupled to the BTS at each of the T/R sites S1, S2 and S3 by means of communication links L1, L2 and L3.

The control point 104 communicates substantially identical signals to each of the T/R sites where the signals are transmitted at a controlled time and on the same RF frequency to one or more mobile radio units within the coverage areas A1, A2 and/or A3. As used herein, a mobile subscriber unit can include a vehicle mounted radio system or a portable radio system carried by a user. A mobile subscriber unit M1, M2 and/or M3 can receive such outbound transmissions from a T/R site. As an example, a communication signal can originate with a dispatch console 102 and can be forwarded to the control point 104. The signal can be communicated from the control point to the BTS at each of the T/R sites S1, S2, and S3. The communication can then be transmitted from each BTS at the T/R sites, with appropriate timing offsets applied to the signal so as to minimize time delay interference.

The exemplary system described herein provides a digital control channel and a plurality of working channels to facilitate communications with mobile subscriber units M1, M2 and M3. Accordingly, a request to communicate can be sent from the mobile subscriber unit (e.g. mobile subscriber unit M3) by transmitting a channel assignment request to a BTS (e.g. a BTS locate at T/R site S3) on an inbound control channel. When the channel assignment request is received by the BTS, it is communicated to control point 104. The control point 104 responds by causing a control channel assignment message to be simultaneously transmitted using the BTS located at each of T/R sites S1, S2 and S3. The control channel assignment message is received by the mobile subscriber unit M3 (and any other mobile units that are "called" by that channel assignment. The mobile subscriber unit M3 and any other called mobile subscriber units respond to the channel assignment message by transitioning to a working RF frequency. The called radios then communicate using the working frequency until the termination of the communication session.

During a communication session, transmissions from a mobile subscriber unit (e.g. mobile unit M3) will be received at one or more of the BTSs located at T/R sites S1, S2 and S3. When received, each of these transmissions is forwarded to the control point 104, where the signal with the best signal to noise ratio or lowest bit error rate is selected. That signal is then communicated back to each of the T/R sites where it is rebroadcast by each BTS so that it may be heard by other mobile subscriber units within coverage areas A1, A2 and/or A3. Upon completion of the communication session, the various mobile subscriber units return to a state in which they continue to monitor the outbound control channel for additional control messages.

In order to prevent time delay interference, identical transmissions emanating from BTSs at T/R sites S1, S2 and S3 must be time synchronized. In areas where multiple transmissions from BTSs located at different T/R sites are arriving at a mobile subscriber unit, a signal from one BTS will usually have substantially greater signal strength as compared to signals from the others. In such scenarios, the signal received at the much higher power level will usually overpower the lower power signal such that the lower power signal will have no detrimental or interfering effect at the receiver. This scenario is sometimes referred to as the capture effect. However, each simulcast system will also have one or more overlap areas 108, 109, 110 where the power level of received signals from two separate BTSs is similar, and will cause time domain interference. The timing of transmissions from each BTS at T/R site S1, S2 and S3 must be precisely adjusted relative to transmission from other sites so as to minimize time domain interference.

Various techniques are available for implementing transmitter time synchronization. A common technique is to use a global positioning system (GPS) satellite receiver at each T/R site for providing access to a common timing reference. Other systems for maintaining system timing are also possible. The usual approach for synchronizing simulcast transmitters is to adjust the transmitter offset timing at each BTS to ensure that the signals from two T/R sites (such as transmitter sites S1, S2) arrive in the center of an overlap area (e.g., overlap area 108) at precisely the same time. Time synchronization setup involves a static implementation, meaning that the necessary transmitter timing offsets are carefully determined for each T/R site at system design or installation time, and then fixed or set for each T/R site. The positions of the transmitter sites do not vary over time, and so this approach has provided acceptable results. However, less than optimal results can occur where a mobile subscriber unit is located offset from the center of the overlap area. In such areas, time delay interference issues can still arise in the overlap areas due to the fact that the static timing implementation is optimized for one particular location (e.g., the exact center) within the overlap area as a compromise solution.

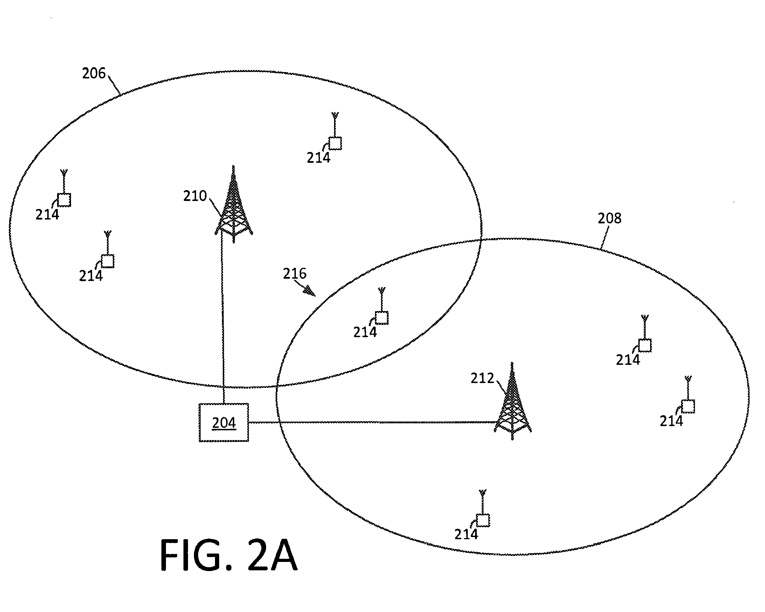

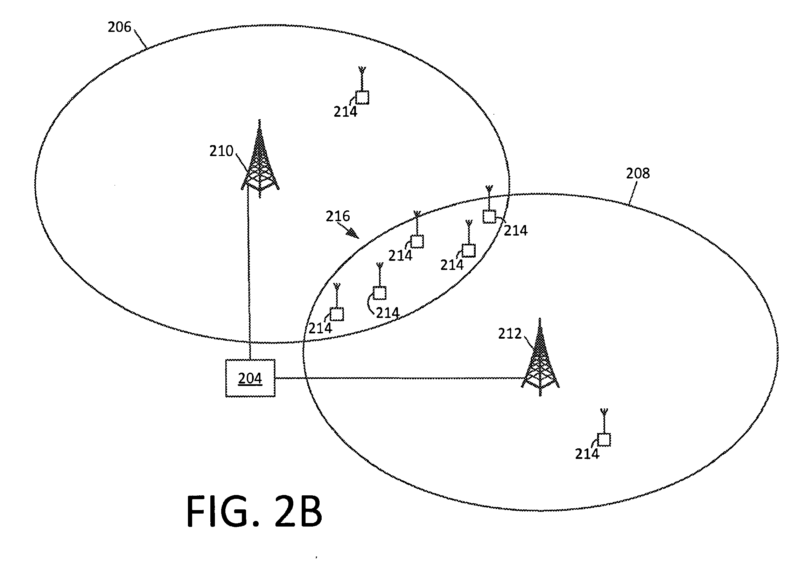

Static implementation of transmitter timing and other system characteristics can provide acceptable performance in a simulcast system, even though time domain interference can still occur to some extent in overlap areas. Overall, the static settings are selected to provide a suitable compromise given the expected distribution of mobile subscriber units in a broad geographic area surrounding a T/R site. But such a static implementation of a simulcast system can result in sub-optimal system performance under non-standard or unusual operating conditions. This concept is illustrated in FIGs. 2A and 2B which show two different sets of simulcast system operating conditions. In each figure, the mobile subscriber units 214 are distributed in each of two coverage areas 206, 208. A BTS located at each T/R site 210, 212 respectively provides transmit coverage under the control of a common control point 204. Under the first set of conditions shown in FIG. 2A, a predetermined set of static settings used to facilitate simulcast operations may provide acceptable overall performance for mobile subscribers which are randomly distributed in coverage areas 206, 208. Some units will inevitably be present in the overlap area 216 as shown. Depending on their precise location within the overlap area, these mobile units may experience time domain interference. The reason is that synchronization timing methods used to synchronize signals in the overlap area are rarely perfect in operation. Accordingly, some timing difference will inevitably occur. Moreover, even if timing synchronization is exactly correct at one location (e.g. an exact center of the overlap area 216), time delay differences will still be experienced by mobile subscriber units in different parts of the overlap area since not all parts of the overlap area can be exactly time synchronized at the same time.

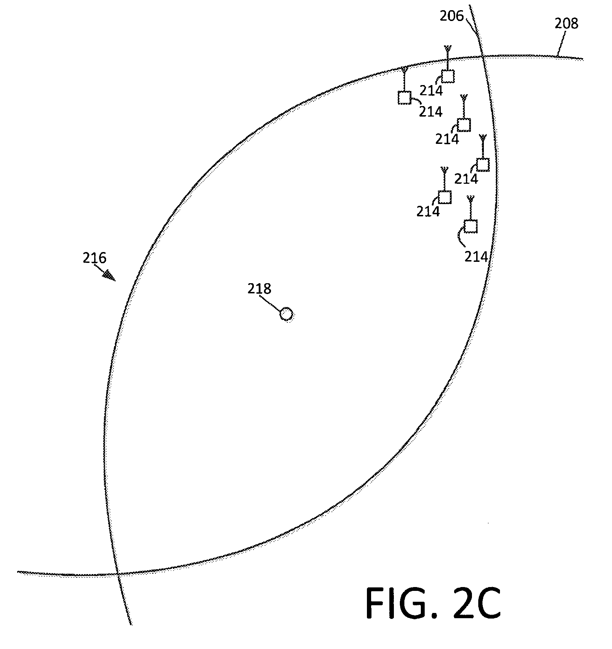

Accordingly, a set of static T/R site settings may provide sub-optimal performance under the conditions shown in FIG. 2B, in which mobile subscriber units 214 are geographically concentrated in an overlap area 216. Likewise, a static set of T/R site settings may provide sub-optimal performance under the conditions shown in FIG. 2C, where mobile subscriber units are concentrated in one part of the overlap area 216. Time domain interference may occur if the location of the mobile subscriber units is geographically distant from a timing center 218 of the overlap area where optimal time synchronization occurs. In conventional systems, where static T/R site settings that are used to facilitate simulcast operations (e.g., time offsets and other parameters pertinent to overlap areas) there is no mechanism to determine whether an opportunity exists for QoS improvement responsive to dynamic conditions after the initial deployment of the system.

Accordingly, the inventive arrangements described herein provide a dynamic system to access and evaluate system performance parameters in real time as mobile subscriber units move about the geographical areas, including overlap areas, serviced by a simulcast communication system. The system further comprises methods and systems to automatically and dynamically optimize simulcast operating parameters (SOPs) to improve system QoS, especially when mobile subscriber units are concentrated in overlap areas. Accordingly, a simulcast system as described herein can dynamically evaluate and adapt to variations in operating conditions by improving simulcast system performance in an overlap area.

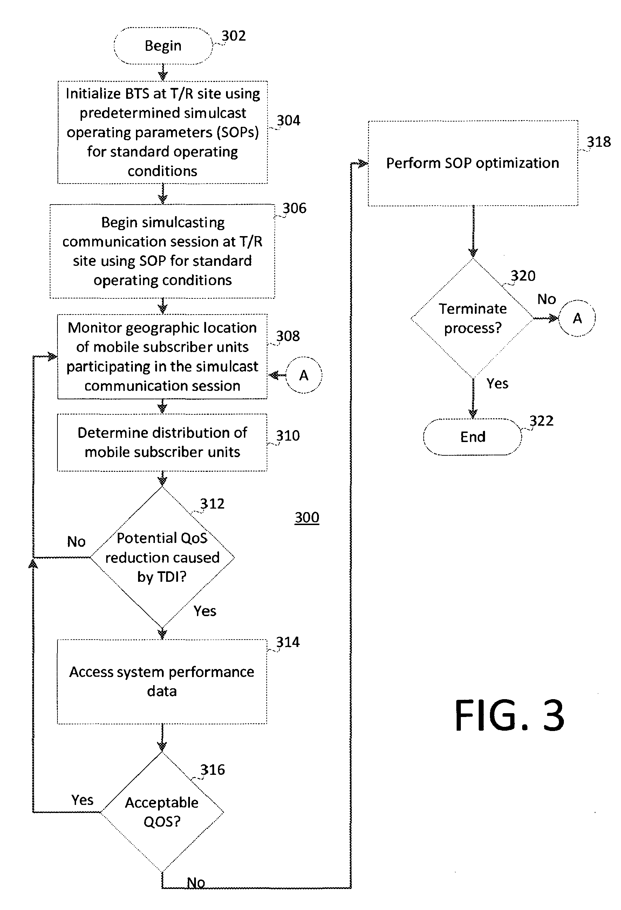

Referring now to FIG. 3, there is shown a flowchart that is useful for understanding the inventive arrangements. The process begins at 302 and continues to 304 where a BTS at a T/R site is initialized for simulcast operations using a predetermined set of SOPs which are chosen to optimize overall system performance. These SOPs can include any operating parameter which must be optimized or adjusted to facilitate simulcast operations, especially within overlap areas. For example, such parameters can include BTS transmitter timing offsets which determine when one transmitter transmits relative to other transmitters in the system, BTS transmit power settings and BTS antenna patterns.

The process continues at 306 where a simulcast communications session begins at the T/R site. The session involves using one or more of the SOPs at the BTS which is located at the T/R site so as to facilitate simulcast communications. At 308, the process continues by monitoring the location of a plurality of mobile subscriber units which are participating in the simulcast communication session. This location monitoring step can be performed by any suitable means which is now known or known in the future. According to one embodiment, each mobile subscriber unit can have an onboard GPS device and reports its location back to the BTS using a data channel. Alternatively, the location of each mobile subscriber can be determined by utilizing a well-known technique such as multilateration (MLAT) and/or triangulation.

At 310, a determination is made concerning the geographic distribution or locations of mobile subscriber units. This step can include a determination of the geographic distribution of mobile subscriber units that are contained within an overlap area. The geographic distribution can be represented or calculated in any convenient manner. In a system with a fixed number of subscribers, the determination can involve a simple comparison of the number of subscribers that are present in a particular area, such as an overlap area to a predetermined threshold number. If the total number of mobile subscriber units in a coverage area varies over time, then the concentration of mobile subscribers in a predetermined area (e.g., an overlap area) can be expressed as a percentage or ratio rather than as an absolute number. According to one aspect, the overlap area can be divided into two or more areas, and each area can be evaluated separately. According to another aspect, this process can involve calculating an average or mean of the mobile subscriber unit locations and a deviation with respect to the average or mean.

Regardless of the precise method employed to determine a current distribution or concentration of mobile subscriber units, the information is used at 312 to determine whether such current distribution or concentration has the potential to cause a reduced network QoS due to time domain interference. For example, such a situation could exist where the relative concentration of mobile subscriber units within an overlap area is unusually high as compared to the overall coverage area for a T/R site. A relatively high concentration of mobile subscriber units within the overlap area can be an indication that one or more design assumptions which were relied upon at design time for SOP selection may no longer be accurate. Similarly, a high concentration of mobile subscribers within a particular part of an overlap areas (e.g., as shown in FIG. 2C) may indicate that current SOP settings are not optimal. Design assumptions (such as expected geographic distribution of mobile subscribers) are used by designers when choosing system parameters, including SOPs that support simulcast operations and prevent time domain interference. When underlying design assumptions are invalid, one or more SOPs originally selected based on those design assumptions may no longer provide optimal network performance with respect to TDI. Under such circumstance different SOPs may be called for. The specific conditions or thresholds used in the evaluation at 312 can be selected by the designer based on computer modeling or empirical data.

Referring again to FIG. 3, if the current distribution of mobile subscriber units does not have the potential to result in reduced QoS (312: No) then the process returns to 308 and location monitoring continues. However, if the current distribution does have the potential to cause reduced QoS due to TDI, then the process continues on to 314 where system performance data is accessed for analysis. The process then continues on to 316 where a determination is made as to whether the system is currently experiencing an acceptable level of QoS. Various measures are available for evaluating QoS in a communication network, as is known. Any suitable method can be used in the method and system described herein. For example, the system performance data can involve data concerning bit error rates (BER) experienced at the mobile transceiver units.

If the communication network is currently maintaining an acceptable QoS levels (316: Yes) then the process can return to 308 and location monitoring continues. However, if QoS levels are being adversely affected by the geographic distribution of mobile subscribers

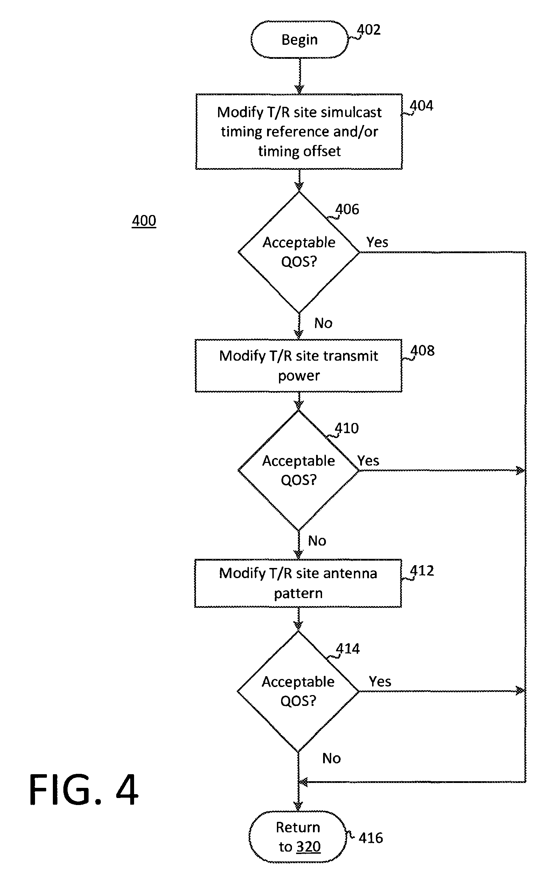

(316: No) then the process continues on to 318 where an SOP optimization routine is performed. An exemplary SOP routine is described below in relation to FIG. 4. After the SOP optimization routine is performed, a determination is made as to whether the process is complete. If so (320: Yes) the process can be terminated at 322; otherwise (320: No) the process returns to 308.

In FIG. 3, the QoS evaluation step 316 is performed after a determination is made in 312 that a particular mobile subscriber distribution has the potential to degrade system QoS. However, the invention is not limited in this regard and in some embodiments, the process can be reversed. In such a scenario a QoS evaluation which shows actual QoS degradation can be used to trigger a geographic distribution evaluation. In such a scenario, the geographic distribution evaluation would then be used to determine whether the SOP optimization at 318 should proceed.

An exemplary SOP optimization routine is described in detail below in relation to FIG. 4. After the SOP optimization routine is completed at 318 a determination is made at 324 as to whether the process in FIG. 3 should be terminated. If not (324: No), the process returns to 308 and continues; otherwise, the process is terminated at 326.

An SOP optimization routine will dynamically modify at least one SOP to reduce time domain interference experienced by one or more mobile subscriber units, particularly mobile subscriber units located in an overlap zone. According to one aspect, the SOP optimization can involve adjusting a transmitter timing offset parameter to reduce TDI experienced by one or more mobile subscribers in an overlap area. According to another aspect, the SOP optimization routine can dynamically modify one or more SOPs so as to redefine or change a geographic boundary of the overlap area. For example, if a substantial number of mobile subscriber units are experiencing TDI in an existing overlap area, one or more of the SOPs (e.g., BTS transmitter power level, BTS antenna patterns) can be modified so that the boundaries of the actual overlap area are moved or shifted. Consequently, the same group of mobile subscribers will no longer be present within the new boundaries of the overlap area and TDI is eliminated for those mobile subscribers. In at least some scenarios, a modification of an SOP associated with one BTS will be performed in conjunction with a modification of a corresponding SOP of a second BTS associated with the same overlap area. For example, when a power level of one BTS is increased, it may be advantageous to simultaneously decrease a transmitter power level associated with a second BTS. These and other features of the inventive arrangements are described in further detail below.

Referring now to FIG. 4, there is shown an exemplary optimization routine 400 which can be used at step 318. The process begins at 402 and continues at 404 where a timing parameter or timing offset value is modified. The modification of the timing parameter or timing offset value can be based on the location of one or more subscriber units within a coverage area. For example, a first modified time offset value can be used if an unusually large number of mobile subscribers are heavily concentrated within a first portion of an overlap area. A second modified time offset value can be used if the same group of mobile subscribers are heavily concentrated in a second portion of an overlap area. A third modified time offset value can be used if the same group of mobile subscribers are widely distributed over the entire overlap area. In some embodiments, the modified time offset value can be dynamically calculated for optimal performance based on the actual current distribution of mobile subscribers.

After the timing reference or timing offset value has been dynamically modified, a determination can be made at 406 as to whether an acceptable QoS level has been achieved as a result of the modification. If so (406: Yes), the process can continue to step 416 and then return to step 320 in FIG. 3. However, if QoS levels remain unacceptable (406: No) then the process continues on to 408 where a transmit power parameter can be modified. The transmit power parameter controls the transmit power level used at a BTS and therefore defines a coverage area serviced by a BTS. By effecting a change in a transmitter power level in one or more BTSs the boundary or geographic location of an overlap area can be changed.

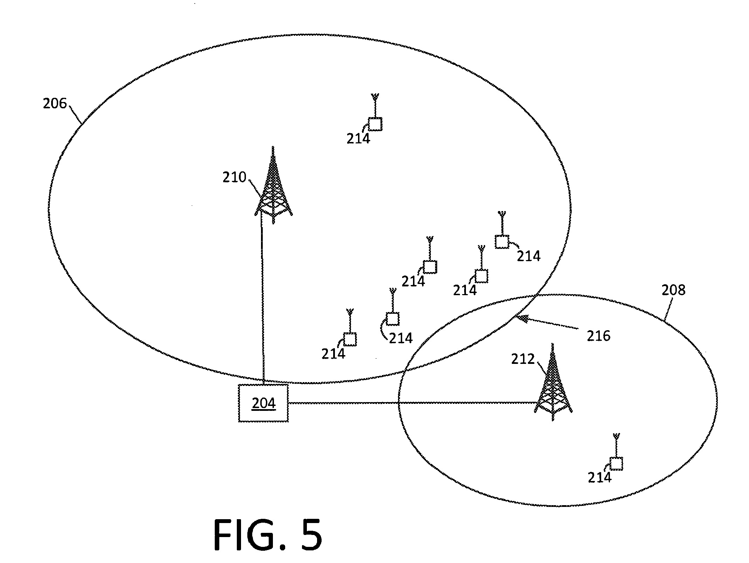

In order to understand how a boundary of an overlap area can be changed using transmitter power level, assume that an overlap area 216 is produced as a result of coverage areas defined by two different base transceivers as shown in FIG. 2B. By increasing the power of a BTS at T/R site 210, and decreasing the power of a BTS at T/R site 212, the boundaries of the overlap area can be changed to produce a new overlap area. This is illustrated in FIG. 5, which shows that the coverage area 206 is increased, and the coverage area 208 is decreased so as to effectively modify the location and/or boundaries of the overlap area. The location of the mobile subscriber units 214 in FIG. 5 is the same as FIG. 2B, but they are no longer contained in the within the modified boundaries of the overlap area 216. Since the mobile subscriber units 214 are no longer in the overlap area, they no longer experience the adverse effects of TDI. Although the variation in transmitter power level in FIG. 5 has been described as occurring at two BTSs associated with overlap area 216, it should be understood that the invention is not limited in this regard. In some embodiments, the overlap can be varied by changing the transmitter power level at only one BTS. When coordination is required among one or more BTSs for implementing the transmitter power adjustments described herein, such coordination can be facilitated by a single control point and/or by communications directly between the involved BTSs.

After a power level parameter at a BTS has been dynamically modified as described herein, a determination can be made at 410 as to whether an acceptable QoS level has been achieved as a result of the modification. If so (410: Yes), the process can return to step 416 and then step 320 in FIG. 3. However, if QoS levels remain unacceptable (410: No) then the process continues on to 412 where an antenna pattern parameter can be modified. The antenna pattern parameter is chosen to controls an antenna pattern of a transmit antenna used by a BTS and therefore defines a shape of a coverage area serviced by a BTS. By effecting a change in a coverage area shape, the boundary or geographic location of an overlap area can be changed. The change in transmit antenna pattern can occur at one or more BTSs associated with a particular overlap area. When coordination is required among one or more BTSs for implementing the antenna pattern adjustments described herein, such coordination can be facilitated by a single control point and/or by communications directly between the involved BTSs.

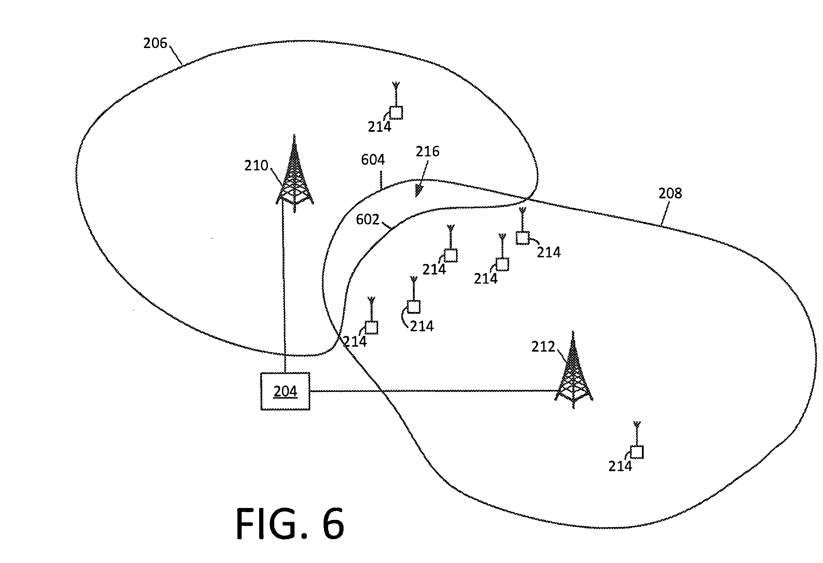

In order to understand how a boundary of an overlap area can be changed using transmitter antenna pattern, assume that an overlap area 216 is produced as shown in FIG. 2B by each BTS using a first set of antenna parameters in a phased array antenna system. By changing the antenna pattern of an antenna used by a BTS at T/R site 210, and optionally changing the antenna pattern of an antenna used at a BTS at T/R site 212, the boundaries of the overlap area can be changed to produce a new overlap area. This is illustrated in FIG. 6, which shows that the shape of coverage area 206 has been modified to include a null 602, and the shape of coverage area 208 has been modified to include a peak 604. These changes effectively change the location and/or boundaries of the overlap area. The location of the mobile subscriber units 214 in FIG. 6 is the same as in FIG. 2B, but they are no longer contained in the within the modified boundaries of the overlap area 216. Since the mobile subscriber units 214 are no longer in the overlap area, they no longer experience the adverse effects of TDI.

Thus far, the adaptive or dynamic modification of SOPs has been described as occurring in response to certain detected distributions of mobile subscriber units which are deemed likely to cause QoS degradation. But the invention is not limited in this regard. Instead, the SOP optimization routines described herein can be performed periodically and/or in response to measured decreases in QoS, without regard to the distribution of mobile subscriber units. As a further alternative, the SOP optimization routines described herein can be performed anytime that a mobile subscriber unit is present in the overlap area. In such a scenario, the presence of a one or more mobile subscriber units in an overlap area 216 could be sufficient to automatically trigger processing similar to the SOP optimization routine shown in FIG. 4 to optimize one or more SOP values.

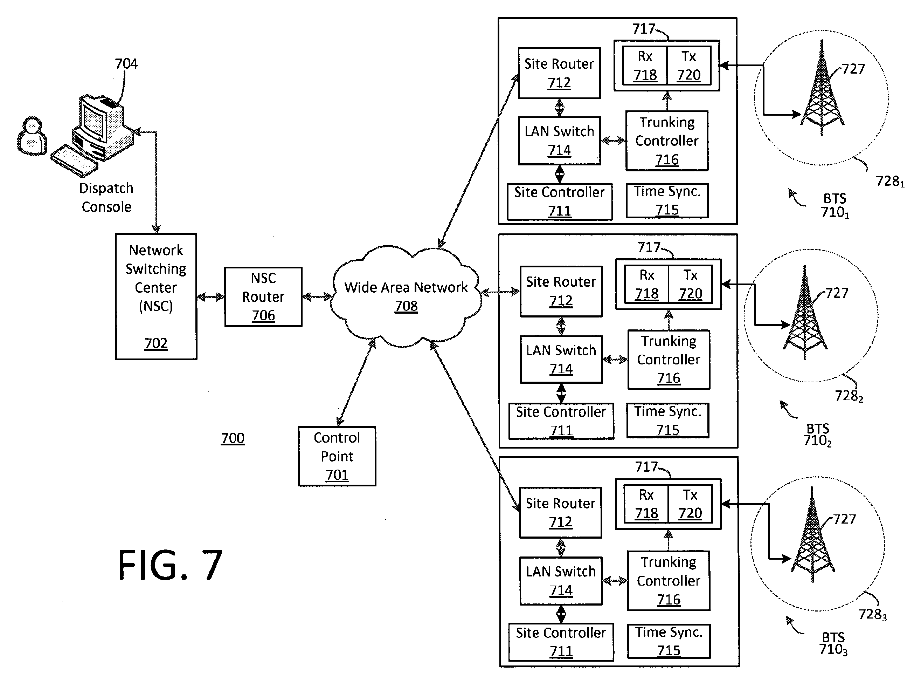

A simulcast communication system 700 for implementing the inventive arrangements will now be described in further detail with reference to FIG. 7. According to one aspect of the invention, the system 700 is a digitally trunked simulcast communication system. For example, the system 700 can use a control channel and a plurality of working channels.

System 700 includes a control point system 701 and a plurality of BTSs 710₁, 710₂, 710₃. One BTS will normally be located at each T/R site (e.g. at each T/R site 210, 212). Control point system 701 is configured to control simulcast operations of BTSs 710₁, 710₂, 710₃. As such, the control point system will communicate in real time substantially identical signaling (including digital control channel signaling and associated timing information) for transmission by the various BTSs. The control point system will also evaluate received signals from mobile radio units (as provided by each of the BTSs), and will select the received signal with best signal to noise ratio or lowest bit error rate. The control point system 701 will forward the selected signal to each of the BTSs for re-transmission. The control point system will also communicate the selected signal to a network switching center 702, which will direct the received voice or data communication to the dispatch console 704. The control point system is advantageously configured to support packet based communications (e.g., IP based packet communications). According to one embodiment, the control point can support trunking in accordance with a Project P25 (P25) communication protocol. The phrase Project 25 or P25, as used herein, refers to a set of system standards produced by the Association of Public Safety Communications Officials International (APCO), the National Association of State Telecommunications Directors (NASTD), selected Federal Agencies and the National Communications System (NCS). The P25 set of system standards generally defines digital radio communication system architectures capable of serving the needs of Public Safety and Government organizations.

In the exemplary embodiment shown in FIG. 7, three BTSs are provided, but the invention is not limited in this regard. Each BTS includes several components for facilitating a digitally trunked simulcast communication system 700. For example, each BTS advantageously includes a site router 712, a LAN switch 714, trunking controller 716, and an RF transceiver 717. Routers and LAN switches are well known in the art and therefore will not be described here in detail. However, it will be appreciated that site router 712 can receive packetized data communications from LAN switch and from the wide area network and route such packetized communications to an appropriate network destination address. LAN switch 714 directs packetized data communications received by the BTS to the router, to one or more trunking controllers and/or to site controller 711.

The RF transceiver 717 will include a radio receiver 718 and radio transmitter 720. The radio receiver 718 and transmitter 720 are advantageously configured for receiving and transmitting RF signals in accordance with a predefined air interface protocol selected for communicating with mobile subscriber units. For example, the transceiver can be configured for implementing an air interface consistent with an industry standard P25 communication protocol. The phrase mobile subscriber units as used herein can include vehicular mounted radios and portable radio units which are carried by a user. Each BTS 710₁, 710₂, 710₃ will generally include one or more antennas 727 for communicating with mobile radio units in a respective communication coverage area 728₁, 728₂, 728₃. In some embodiments, the antennas 727 can be of the phased array type. The coverage areas in FIG. 7 are not shown to be overlapping, but it will be appreciated that such coverage areas would in fact overlap in a simulcast system. For example, the coverage areas 728₁, 728₂, 728₃ could overlap in a manner similar to that shown and described in relation to areas A1, A2 and A3 in FIG. 1.

The trunking controller 716 at each BTS is configured to facilitate trunked radio communications with mobile subscriber units in accordance with a trunked radio communication system protocol. Accordingly, communication sessions can in certain embodiments be instantiated using a control channel and can thereafter be maintained using one or more working channels. Trunking controllers are well known in the art and therefore will not be described here in detail. Each of the BTSs can also include a site controller 711. In some embodiments, the site controller 711 can be a custom or general purpose computer processing device which is configured for controlling the operation of a particular BTS as hereinafter described. As such, one or more processing steps described herein can be performed at site controller 711. In some embodiments, the functions of the site controller can advantageously be implemented by the trunking controller 716. In such embodiments, the trunking controller and the site controller would be combined in a single processing system.

Each BTS maintains time synchronization with the other BTSs by means of a time synchronization unit 715. In some embodiments, the time synchronization unit 715 can include a global positioning system (GPS) satellite receiver for providing access to a common timing reference. GPS based time synchronization systems for simulcast communications are well known in the art and therefore will not be described here in detail. Other systems for maintaining time synchronization are also possible, and time synchronization units 715 can utilize any synchronization method now known or known in the future for purposes for synchronizing simulcast transmissions.

Control point system 701 communicates with the BTSs 710₁, 710₂, 710₃ by way of a suitable communication network, such as a wide area network 708. According to one aspect, wide area network 708 is advantageously selected to be a packet switched data network. Accordingly, when control point system 701 needs to communicate with the BTSs 710₁, 710₂, 710₃, it does so by transmitting one or more data packets which include header information specifying the network address of the various BTSs. Similarly, when BTSs 710₁, 710₂, 710₃ wish to communicate with control point system 701, they each do so by transmitting one or more data packets including packet header information which specifies the network address of the control point system 701. A dispatch console 704 is communicatively coupled to the wide area network 708 by means of network switching center (NSC) 702 and an NSC router 706. The dispatch console facilitates communications between a dispatch operator and mobile radio units (not shown) in coverage areas 728₁, 728₂, 728₃.

The network switching center 702 maintains a dynamic database of mobile subscriber units and consoles. This database includes information specifying which communication groups each radio is configured to participate in, which site each radio is using to communicate and the network address of each site. The NSC uses this database to forward call traffic to every site and console that needs the call data so that every member of the communication group can receive the communication.

A voice communication originating at dispatch console 704 is packetized and communicated to the control point system 701. For example, this can be accomplished by including with each packet a network destination address associated with the control point system 701. The data packets are communicated from dispatch console 704 to NSC 702. The packets are then communicated through NSC router 706 and wide area network 708, to finally arrive at the control point system 701. Once received at control point system 701, the content of the data packets containing the voice communication are processed by the control point system 701 and communicated to each BTS 710₁, 710₂, 710₃ for transmission. These packets can be communicated to the BTSs using conventional unicast packet communication methods in which the network address of the various BTSs 710₁, 710₂, 710₃ is specified as the destination address or using multicast type packet communication methods in which the various BTSs join the multicast group which is the destination network address. The data packets are used at BTSs to generate the voice or data communication signal. The voice communication signal is transmitted at each BTS 710₁, 710₂, 710₃ at substantially the same time, but with very small timing offsets selected to minimize time domain interference in overlap areas. Accordingly, the voice communication from the dispatch operator can be received and heard by operators of mobile units within each of the coverage areas 728₁, 728₂, 728₃. Similarly data communication signals are routed through the NSC to the control point and signals for transmission are communicated to the BTSs as a stream of data packets.

Voice and/or data communications from a mobile subscriber unit (not shown in FIG. 7) are received at one or more of the BTSs 710₁, 710₂, 710₃ and forwarded to the control point system 701 using conventional packet based network communications. The control point system 701 compares the quality of the signals received at the various BTSs and chooses the signal packets having the best signal quality. The selected packets are then communicated over the wide area network 708 from the control point system 701 to the dispatch console 704. Conventional packet communications are used for this purpose. At the dispatch console, the packetized data is used to reproduce the voice communication from the mobile unit for the benefit of the dispatch console operator. The selected received signal from the mobile unit can also be formatted for transmission in accordance with a predetermined air interface protocol and communicated over the wide area network 708 to each of the BTSs 710₁, 710₂, 710₃. Upon arrival at each of the BTSs, the packetized data is transmitted (simulcasted) by the BTSs. This transmission is provided so that the received signal from the mobile unit can be received by other mobile units within coverage areas 728₁, 728₂, 728₃.

Trunking operations for system 700 can be configured in accordance with any trunking system protocol now known or known in the future for establishing a digitally trunked simulcast communication system. Accordingly, system 700 can make use of various control channels to set up calls and establish working channels as is known. Some of these trunking operations can be managed by control point 701 and trunking controllers 716 provided in the respective BTSs 710₁, 710₂, 710₃. The particular trunking protocol used is not critical to the invention.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application. Thus, the breadth and scope of the present invention should not be limited by any of the above described embodiments. Rather, the scope of the invention should be defined in accordance with the following claims and their equivalents.

## Claims

1. A method for dynamic network optimization in a simulcast communication system, comprising:
hosting a simulcast communication session using a first base transceiver station (BTS) and at least one simulcast operating parameter (SOP) assigned to the first BTS, the at least one SOP selected to minimize time domain interference within at least a portion of an overlap area defined between the first BTS and a second BTS when signals from the first BTS and second BTS are concurrently received within the overlap area;
monitoring at least one condition which is indicative of the potential occurrence of time domain interference among one or more of a plurality of mobile subscriber units participating in the simulcast communication session;
responsive to the monitoring, dynamically modifying the at least one SOP to reduce time domain interference experienced by one or more of the plurality of mobile subscriber units.

2. The method according to claim 1, wherein the at least one SOP is dynamically modified to change a geographic boundary of the overlap area.

3. The method according to claim 2, wherein the geographic boundary of the overlap area is dynamically modified to reduce a number of mobile subscriber units which are present within the overlap area.

4. The method according to claim 1, wherein the at least one SOP is a base station timing parameter which determines a transmit time of the first BTS relative to the second BTS for reducing time domain interference in an overlap area.

5. The method according to claim 1 wherein the at least one SOP further includes at least one of a parameter that controls a transmit power level of the first BTS and a parameter that controls an antenna pattern of the first BTS.

6. The method according to claim 1, wherein the at least one SOP assigned to the second BTS is varied in coordination with at least one SOP of the first BTS.

7. The method according to claim 1 wherein the condition that is monitored comprises at least one of a geographic location and a geographic distribution of the plurality of mobile subscriber units.

8. A method for dynamic network optimization in a simulcast communication system, comprising:
hosting a simulcast communication session using a first base transceiver station (BTS) and a second BTS, each utilizing at least one simulcast operating parameter (SOP) selected to minimize time domain interference within at least a portion of an overlap area defined between the first and second BTS when signals from the first BTS and a second BTS are concurrently received within the overlap area;
monitoring at least one condition associated with a plurality of mobile subscriber units participating in the simulcast communication session;
responsive to the monitoring, dynamically modifying the at least one SOP in the first BTS in coordination with the second BTS to optimize the performance of the network.

9. The method according to claim 8, wherein the at least one SOP is selected from the group consisting of a transmitter timing parameter which determines a time when signals are transmitted from at least one of the first and second transmitters, a transmitter power output parameter which controls a transmitted power output from at least one of the first and second transmitter, and a transmitter antenna pattern parameter which controls an antenna pattern used when at least one of the first and second BTS is transmitting.

10. A simulcast communication system, comprising:
a first base transceiver station (BTS) which hosts a simulcast communication session using at least one simulcast operating parameter (SOP) selected to minimize time domain interference within at least a portion of an overlap area defined between the first BTS and a second BTS of the simulcast communication system when signals from the first BTS and a second BTS are concurrently received within the overlap area;
at least one computing device which monitors at least one condition associated with a plurality of mobile subscriber units participating in the simulcast communication session and, responsive to the monitoring, dynamically modifies the at least one SOP to reduce time domain interference experienced by one or more of the plurality of mobile subscriber units as a result of near simultaneous transmissions from the first and second BTS.
